# DEMANDE DE BREVET EUROPEEN

(11) **EP 2 377 624 A2**
(43) Date de publication de la demande: **19.10.2011**
(21) Numéro de dépôt: 11161255.2
(22) Date de dépôt: 06.04.2011
(51) Int. Cl.: B05D 5/00, C04B 41/48, C04B 41/83

(54) **Procédé de réalisation d'un revêtement de surface de type faïence ou céramique, multi-couches avec phase préalable de réparation**

(30) Priorité: 13.04.2010 FR 1052812
(71) Demandeur: Palazzolo, Rocco, 75003 Paris (FR); Mejladi, Moktar, 45120 Cepoy (FR)
(72) Inventeur: Palazzolo, Rocco, 75003 Paris (FR); Mejladi, Moktar, 45120 Cepoy (FR)
(74) Mandataire: Esselin, Sophie

(57) **Abrégé**

L'invention concerne un procédé de réalisation d'un revêtement sur une surface de type faïence ou céramique présentant des inhomogénéités de surface, ledit revêtement comportant au moins une couche de peinture caractérisé en ce qu'il comporte les étapes suivantes :
- le comblement et le recouvrement des inhomogénéités de surface par un mastic époxy adhésif présentant une très bonne adhérence avec la surface à recouvrir et une très bonne accroche pour le revêtement ;
- le nivelage des inhomogénéités de surface recouvertes par ledit mastic époxy :
- le dépôt de la couche de peinture.

## Description

Le domaine de l'invention est celui des revêtements de surface et notamment de surfaces exposées à des contraintes de tout type, par exemple de type charge pondérale (pour un sol) ou bien encore de type échauffement important (pour un plan de travail de cuisine) ou bien encore de type agression par des produits acides de nettoyage.

II existe à ce jour de nombreuses classes de revêtements de surfaces très résistants mais ces revêtements nécessitent généralement une logistique assez lourde et lorsqu'il convient d'en changer pour cause de dégradation ou cause de changement de décoration, cette dernière opération s'avère également fastidieuse.

Ainsi aujourd'hui, lorsqu'un utilisateur cherche à changer un revêtement de décoration au sol ou au niveau de mur de cuisine ou salle de bain, par exemple de type carrelage, usuellement il procède au retrait de ce dernier et doit entreprendre des travaux assez lourds pour reposer un nouveau type de carrelage. IL en est de même lorsqu'un utilisateur souhaite changer un plan de travail de cuisine couplé au carrelage présent autour.

Alors que l'engouement du public pour des travaux de renouvellement de décoration ne cesse de croître, il convient de plus en plus de trouver des solutions facilitant ce type de travaux pour les utilisateurs et tout particulièrement pour les usagers amateurs.

La demanderesse a déjà proposé dans ce domaine, une demande de brevet FR0707965 publiée sous la référence 2923489 concernant un nouveau type de revêtement de décoration caractérisé en ce qu'il comporte au moins une couche de peinture résistante bi-composant et une couche superficielle de résine de protection, ladite résine de protection étant translucide ou transparente.

Néanmoins, selon l'état de surface des sols ou des surfaces que l'on cherche à revêtir, présentant le cas échéant des failles ou tout autre défaut de surface et plus encore s'il s'agit d'un carrelage à recouvrir avec de manière inhérente des joints apparents, la structure de revêtement proposée peut présenter certains défauts visuels, tout en accumulant par ailleurs également des problèmes d'adhérence sur des surfaces inhomogènes.

C'est pourquoi, la présente invention a pour objet un procédé de réalisation d'un revêtement sur une surface de type faïence ou céramique présentant des inhomogénéités de surface, ledit revêtement comportant au moins une couche de peinture caractérisé en ce qu'il comporte les étapes suivantes :
- le comblement et le recouvrement des inhomogénéités de surface par un mastic époxy adhésif présentant une très bonne adhérence avec la surface à recouvrir ;
- le nivelage des inhomogénéités de surface recouvertes par ledit mastic époxy adhésif ;
- le dépôt de la couche de peinture.

Selon une variante de l'invention, la peinture est une peinture bi-composant.

Selon une variante de l'invention, le procédé comprend une étape de fabrication du mastic époxy adhésif comprenant la réaction d'un bi-composant comportant au moins un premier composant A de type prépolymère à base de bisphénol et d'épichlorhydrine et au moins un second composant B à base de polyamine.

Selon une variante de l'invention, le premier composant A comporte en outre de l'alcool benzylique.

Selon une variante de l'invention, le premier composant comporte en outre de l'oxiranne, dérivés mono [(alcoolates en C12-14)methyl].

Selon une variante de l'invention, le second composant B comporte du 3 -Aminomethyl -3,5,5-Trimethylhylcyclohexylamine.

Selon une variante de l'invention, le mastic époxy adhésif comporte en outre un agent épaississant de résine de type nitrate de calcium.

Selon une variante de l'invention, le procédé comporte une étape de nettoyage de la surface à revêtir par un agent dégraissant, pouvant être de type acétone.

Selon une variante de l'invention, le procédé comporte une opération de ponçage après dépôt du mastic de type époxy adhésif.

Selon une variante de l'invention, le procédé comporte en outre une étape de dépôt de résine de protection à la surface de la couche de peinture.

Selon une variante de l'invention, la peinture bi-composant comporte au moins un premier composant de type prépolymère à base de bisphénol et d'épichlorhydrine et au moins un second composant de type polyamine.

Selon une variante de l'invention, le premier composant comporte un mélange de bisphénol A et de bisphénol F, le bisphénol F permettant d'assurer de bonnes propriétés d'adhérence sur une surface destinée à être recouverte par ledit revêtement.

Selon une variante de l'invention, la peinture bi-composant comporte en outre des charges minérales de type dioxyde de titane et/ou de type mica et/ou de type sulfate de baryum et/ou de type talc et/ou de type silicate alcalin, permettant de renforcer ladite peinture.

Selon une variante de l'invention, la résine de protection est une résine bi-composant comportant au moins un premier composant comprenant un prépolymère comportant au moins un premier composant de type prépolymère à base de bisphénol et d'épichlorhydrine et au moins un second composant de type triméthylcyclohexylamine.

Selon une variante de l'invention, le prépolymère de la résine comporte en outre un éther d'alkyl (C12-C14)glycidyl.

Selon une variante de l'invention, la résine de protection comporte en outre des particules de quartz.

Selon une variante de l'invention, la résine de protection comporte en outre des inclusions renforçant l'aspect de décoration conférée par la couche de peinture.

Selon une variante de l'invention, les inclusions sont de type paillettes, ou des micro-objets ou bien encore des particules luminescentes ou phosphorescentes.

L'invention sera mieux comprise et d'autres avantages apparaîtront à la lecture de la description qui va suivre donnée à titre non limitatif.

Selon le procédé de la présente invention, il est proposé de réaliser un revêtement adhérent sur tout type de surface et notamment sur des surfaces de type faïence ou céramique, cumulant les propriétés de revêtement de protection et de décoration. Typiquement la surface adressée peut être un évier, un lavabo en émail mais également un carrelage de sol.

Bien souvent, de tels revêtements subissent des chocs entraînant la présence de zones ébréchées.

Il est ainsi proposé de combler et recouvrir les zones défectueuses ou plus généralement à inhomogénéités de surface, par un mastic de type époxy adhésif présentant en outre de bonnes propriétés d'adhérence sur la surface concernée, de travailler ce mastic en surface une fois bien séché pour pouvoir dans une seconde phase venir le recouvrir d'une peinture très résistante, cette peinture pouvant être elle-même recouverte d'une résine de protection.

En effet, une fois sec, le mastic durci assure une continuité de surface, il permet de combler des failles, et plus généralement de réparer une surface, avant de procéder au dépôt de la peinture de décoration pour réaliser le revêtement de la surface concernée.

On réalise ainsi un revêtement présentant toutes les caractéristiques d'une peinture de décoration, pouvant même être agrémentée d'inserts et possédant d'excellentes propriétés à la fois en terme d'adhérence qu'en terme de satisfaction visuelle, dans la mesure où l'ensemble des inhomogénéités ont été gommées grâce à l'action du mastic époxy.

Le mastic choisi, est un adhésif multifonctionnel bi-composant de haute résistance et dureté, polymérisable à température ambiante.

Il est adapté pour unir une gamme vaste de céramiques, gomme, plastique rigide et la plus grande part des matériaux à usage commun.

C'est un adhésif versatile pour usage artisanal et également pour la plus grande partie des applications industrielles.

De manière générale, pour mettre en oeuvre le procédé de l'invention, Il convient néanmoins de manière préférentielle de procéder à un pré-traitement des surfaces à travailler pour obtenir les meilleures performances en terme d'adhérence.

Ainsi, les surfaces à travailler et notamment dans le cas de failles ou de joints défectueux présents au niveau de la surface à revêtir, les surfaces à travailler doivent être nettoyées avec un bon agent dégraissant, comme l'acétone ou un agent dégraissant approprié pour pouvoir enlever les traces quelconques d'huile, gras ou salissure.

Le mastic utilisé pour lier ces surfaces locales permet d'obtenir des liens les plus forts et plus durables grâce en outre à une opération d'abrasion mécanique ou de gravure chimique.

Cette opération d'abrasion peut-être suivie avantageusement par un second traitement dégraissant.

### Exemple de mastic époxy utilisé dans le procédé de l'invention :

Le mastic époxy adhésif bi-composant est ainsi élaboré à partir d'un premier composant A et d'un second composant B :

Le premier composant A comprend :
- du bisphénol-A-épichlorydrine en concentration comprise entre 70% et 90% ;
- de l'alcool benzylique en concentration comprise entre 2,5 % et 5%;
- de l'oxiranne, dérivés mono [(alcoolates en C12-14)methyl] en concentration comprise entre 5% et 7%.

Le second composant B comprend :
- du 3 -Aminomethyl -3,5,5-Trimethylhylcyclohexylamine en concentration comprise entre 25% et 35%
- de l'éthanol en concentration comprise entre 0,5% et 1,5% ;
- de l'alcool benzylique en concentration comprise entre 30% et 40% ;
- du nitrate de calcium en concentration comprise entre 0, 5% et 1,5%.

On procède alors au mélange des composés A et B dans les proportions suivantes :
Composant A : 100
Composant B : 50

La résine et le durcisseur sont mélangés jusqu'à former un mélange homogène.

On procède alors à l'enduction des surfaces à recouvrir :

Le mélange résine / durcisseur peut être appliqué avec une spatule sur les surfaces à unir, après préparation desdites surfaces préparées et séchées.

Une pression de contact uniforme sur toute la zone unie assure une polymérisation parfaite.

Préférentiellement, les outils employés pour l'enduction du mastic sont nettoyés à l'acétone ou avec un autre solvant avant que les restes d'adhésif n'aient le temps de polymériser.

Le nettoyage peut ce faire également par ponçage.

Selon l'invention, la première étape du procédé permet de réparer préalablement toute surface défectueuse que l'on souhaite revêtir d'un revêtement de décoration. C'est pourquoi, dans une seconde étape, on peut procéder comme décrit dans la demande de brevet FR 0707965, au dépôt d'une couche de peinture bi-composant présentant l'intérêt d'être très résistante après réaction des deux composants entre eux.

Par exemple, la peinture bi-composant peut comprendre un premier composant de type prépolymère à base de bisphénol A et d'épichlorhydrine susceptible de former le composé suivant selon le schéma réactionnel suivant :

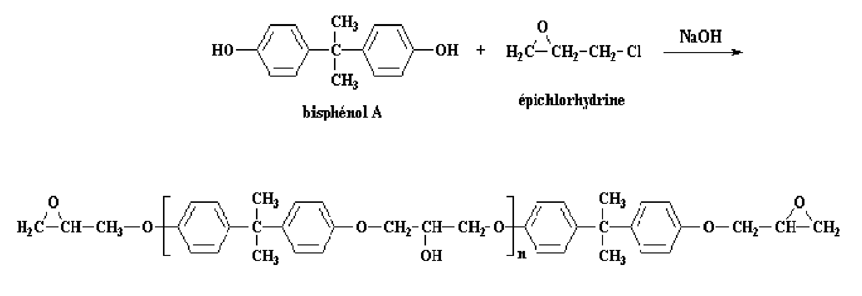

Avantageusement le prépolymère peut également être préparé à partir d'un mélange de bisphénol A et de bisphénol F et d'épichlorhydrine, dont les formules chimiques sont détaillées ci-après :

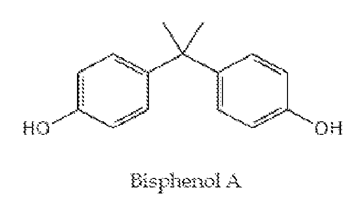

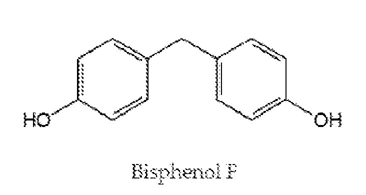

L'intérêt de l'ajout d'un bisphénol F réside dans l'amélioration des propriétés d'accroche pouvant être obtenues dans la peinture finale.

De manière générale, en présence de prépolymères, il convient de développer des liaisons entre lesdits prépolymères. Pour cela on ajoute un deuxième composant de type polyamine pouvant réagir avec les liaisons terminales des prépolymères. Les deux composants dans des solvants de type 3-butoxy-2-propanol et 1-méthoxy-2-propanol sont mélangés au moment de l'emploi pour recouvrir la surface concernée. Ce mélange est avant enduction mélangé à de l'eau pour obtenir la viscosité voulue. Par ailleurs des charges minérales y sont également ajoutées : des charges classiques pour obtenir les couleurs souhaitées et d'autres charges type des silicates alcalins comportant par exemple du magnésium ou de l'aluminium ou bien encore du fer, particulièrement bien adaptés pour des applications de revêtements de sols.

L'intérêt de ces peintures tient à leur très bonne résistance ce qui permet de les utiliser en tant que revêtement autre de décoration alors que la plupart des peintures sont utilisées uniquement pour recouvrir des murs ou des plafonds. Elle présente par ailleurs un fort pouvoir d'accroche sur tout type de surface.

On obtient ainsi une couche de décoration présentant toute la palette de décoration souhaitée en fonction des pigments présents.

La couche de décoration peut également être chargée avec de la silice ou du quartz de manière à augmenter son épaisseur jusqu'à environ 400 à 500 microns.

Lorsque l'on veut renforcer le caractère de dureté du revêtement, typiquement dans le cas de revêtement de sol, on peut procéder dans une troisième phase au dépôt supplémentaire d'une résine de protection, transparente en finition.

Ainsi, lorsque la couche de peinture bi-composant est bien séchée (typiquement après environ une dizaine d'heures), on peut procéder au dépôt d'une couche de résine de protection qui permet ainsi d'encapsuler la couche de peinture et de protéger les effets de décoration.

La résine de protection est choisie pour posséder des propriétés particulières en terme de résistance et de facilité à pouvoir recouvrir avec une grande uniformité de nombreuses surfaces en permettant ainsi de nombreuses applications.

La résine est avantageusement translucide, voire même transparente permettant de laisser apparente la décoration réalisée préalablement. Elle peut avantageusement elle-même comprendre des inclusions renforçant les effets de décoration. Ces inclusions peuvent être de tout type : micro-objets de décoration pour éléments de salle de bain ou de sanitaire, inclusions pouvant être rendues lumineuses pour revêtement au sol par l'ajout de particules luminescentes ou phosphorescentes, .... Dans ce cas, la résine de protection comporte avantageusement une épaisseur plus élevée de l'ordre de 1000 microns.

Pour présenter une grande résistance aux agressions qu'elles soient de nature mécanique ou chimique, la résine de protection du revêtement de l'invention est avantageusement une résine également bi-composant.

Elle peut typiquement comprendre également un premier composant de type bisphénol A et d'épichorhydrine et un second composant de type polymamine. Le premier composant peut aussi avantageusement comprendre de l'éther d'alkyl (C12-C14)glycidyl. Les solvants employés pour réaliser le mélange desdits composants peuvent typiquement être de type du 3-butoxy-2-propanol et de l'alcool benzylique.

## Revendications

1. Procédé de réalisation d'un revêtement sur une surface de type faïence ou céramique présentant des inhomogénéités de surface, ledit revêtement comportant au moins une couche de peinture **caractérisé en ce qu'**il comporte les étapes suivantes :
- le comblement et le recouvrement des inhomogénéités de surface par un mastic époxy adhésif présentant une très bonne adhérence avec la surface à recouvrir et une très bonne accroche pour le revêtement ;
- le nivelage des inhomogénéités de surface recouvertes par ledit mastic époxy :
- le dépôt de la couche de peinture.

2. Procédé de réalisation d'un revêtement sur une surface de type faïence ou céramique présentant des inhomogénéités de surface selon la revendication 1, **caractérisé en ce que** la peinture est une peinture bi-composant.

3. Procédé de réalisation d'un revêtement sur une surface de type faïence ou céramique présentant des inhomogénéités de surface selon l'une des revendications 1 ou 2, **caractérisé en ce qu'**il comprend une étape de fabrication du mastic époxy adhésif comprenant la réaction d'un bi-composant comportant au moins un premier composant (A) de type prépolymère à base de bisphénol et d'épichlorhydrine et au moins un second composant (B) à base de polyamine

4. Procédé de réalisation d'un revêtement sur une surface de type faïence ou céramique présentant des inhomogénéités de surface selon la revendication 3, **caractérisé en ce que** le premier composant (A) comporte en outre de l'alcool benzylique.

5. Procédé de réalisation d'un revêtement sur une surface de type faïence ou céramique présentant des inhomogénéités de surface selon la revendication 4, **caractérisé en ce que** le premier composant comporte en outre de l'oxiranne, dérivés mono [(alcoolates en C12-14)methyl].

6. Procédé de réalisation d'un revêtement sur une surface de type faïence ou céramique présentant des inhomogénéités de surface selon l'une des revendications 2 à 5, **caractérisé en ce que** le second composant (B) comporte du 3 -Aminomethyl -3,5,5-Trimethylhylcyclohexylamine.

7. Procédé de réalisation d'un revêtement sur une surface de type faïence ou céramique présentant des inhomogénéités de surface selon l'une des revendications 1 à 6, **caractérisé en ce que** le mastic époxy adhésif comporte en outre un agent épaississant de résine, de type nitrate de calcium.

8. Procédé de réalisation d'un revêtement sur une surface de type faïence ou céramique présentant des inhomogénéités de surface selon l'une des revendications 1 à 7, **caractérisé en ce qu'**il comprend le nettoyage de la surface à revêtir par un agent dégraissant, pouvant être de type acétone.

9. Procédé de réalisation d'un revêtement sur une surface de type faïence ou céramique présentant des inhomogénéités de surface selon l'une des revendications 1 à 7, **caractérisé en ce qu'**il comporte une opération de ponçage après dépôt du mastic de type époxy adhésif.

10. Procédé de réalisation d'un revêtement sur une surface de type faïence ou céramique présentant des inhomogénéités de surface selon l'une des revendications 1 à 9, **caractérisé en ce qu'**il comporte en outre une étape de dépôt de résine de protection à la surface de la couche de peinture.

11. Procédé de réalisation d'un revêtement sur une surface de type faïence ou céramique présentant des inhomogénéités de surface selon l'une des revendications 2 à 10, **caractérisé en ce que** la peinture bi-composant comporte au moins un premier composant de type prépolymère à base de bisphénol et d'épichlorhydrine et au moins un second composant de type polyamine.

12. Procédé de réalisation d'un revêtement sur une surface de type faïence ou céramique présentant des inhomogénéités de surface selon la revendication 11, **caractérisé en ce que** le premier composant comporte un mélange de bisphénol A et de bisphénol F, le bisphénol F permettant d'assurer de bonnes propriétés d'adhérence sur une surface destinée à être recouverte par ledit revêtement.

13. Procédé de réalisation d'un revêtement sur une surface de type faïence ou céramique présentant des inhomogénéités de surface selon l'une des revendications 2 à 10, **caractérisé en ce que** la peinture bi-composant comporte en outre des charges minérales de type dioxyde de titane et/ou de type mica et/ou de type sulfate de baryum et/ou de type talc et/ou de type silicate alcalin, permettant de renforcer ladite peinture.

14. Procédé de réalisation d'un revêtement sur une surface de type faïence ou céramique présentant des inhomogénéités de surface selon l'une des revendications 10 à 12, **caractérisé en ce que** la résine de protection est une résine bi-composant comportant au moins un premier composant comprenant un prépolymère comportant au moins un premier composant de type prépolymère à base de bisphénol et d'épichlorhydrine et au moins un second composant de type triméthylcyclohexylamine.

15. Procédé de réalisation d'un revêtement sur une surface de type faïence ou céramique présentant des inhomogénéités de surface selon la revendication 14, caractérisé en ce le prépolymère de la résine comporte en outre un éther d'alkyl (C12-C14)glycidyl.

16. Procédé de réalisation d'un revêtement sur une surface de type faïence ou céramique présentant des inhomogénéités de surface selon l'une des revendications 10 à 14, **caractérisé en ce que** la résine de protection comporte en outre des particules de quartz.

17. Procédé de réalisation d'un revêtement sur une surface de type faïence ou céramique présentant des inhomogénéités de surface selon l'une des revendications 10 à 16, **caractérisé en ce que** la résine de protection comporte en outre des inclusions renforçant l'aspect de décoration conférée par la couche de peinture.

18. Procédé de réalisation d'un revêtement sur une surface de type faïence ou céramique présentant des inhomogénéités de surface selon la revendication 17, **caractérisé en ce que** les inclusions sont de type paillettes, ou des micro-objets ou bien encore des particules luminescentes ou phosphorescentes.

19. Procédé de réalisation d'un revêtement sur une surface de type faïence ou céramique présentant des inhomogénéités de surface selon l'une des revendications 10 à 18, caractérisé en qu'il comporte en outre le dépôt d'une couche intermédiaire de peinture, pouvant être de type acrylique, entre le dépôt de la couche de peinture bi-composant et le dépôt de la résine de protection.
